# EUROPÄISCHE PATENTSCHRIFT

(11) **EP 3 026 531 B1**
(45) Veröffentlichungstag und Bekanntmachung des Hinweises auf die Patenterteilung: **17.07.2019**
(21) Anmeldenummer: 15194871.8
(22) Anmeldetag: 17.11.2015
(51) Int. Cl.: G06F 3/023, A01D 41/00, G06F 3/0488, G06F 3/0484, B60K 35/00, G06F 3/01, A01D 34/82, A01D 41/127, B60K 37/06

(54) **MENSCH-MASCHINE-SCHNITTSTELLE FÜR EIN LANDWIRTSCHAFTLICHES ARBEITSGERÄT, STEUERUNGSSYSTEM UND LANDWIRTSCHAFTLICHES ARBEITSGERÄT**
HUMAN-MACHINE INTERFACE FOR AN AGRICULTURAL WORKING DEVICE, CONTROL SYSTEM AND AGRICULTURAL WORKING DEVICE
INTERFACE HOMME-MACHINE POUR UN ENGIN AGRICOLE, SYSTÈME DE COMMANDE ET ENGIN AGRICOLE

(30) Priorität: 28.11.2014 DE 102014117544
(43) Veröffentlichungstag der Anmeldung: 01.06.2016
(73) Patentinhaber: CLAAS Saulgau GmbH, 88348 Bad Saulgau (DE)
(72) Erfinder: OBER, Martin, 78736 Epfendorf-Trichtingen (DE); PFLANZE, Sascha, 88348 Braunenweiler (DE); ZIEGLSCHMID, Markus, 72517 Sigmaringendorf (DE)

(56) Entgegenhaltungen:
- US-A- 4 730 941
- US-A- 5 201 068
- US-A1- 2003 037 985
- US-A1- 2011 055 772
- Horsch Maschinen Gmbh: "Gebrauchsanweisung für Horsch E-Manager, Version 9.62", , 31. März 2013 (2013-03-31), Seiten 1-72, XP055262504, Gefunden im Internet: URL:https://www.horsch2.com/fileadmin/fm-d am/Downloads/public-Downloads/Operating%20 Instructions/DE-German/E-Manager/660107_e- man_saetech_1311_de.pdf [gefunden am 2016-04-04]

## Beschreibung

Die Erfindung betrifft eine Mensch-Maschine-Schnittstelle für ein zu steuerndes oder zu regelndes, landwirtschaftliches Arbeitsgerät, ein Steuerungssystem eines landwirtschaftlichen Arbeitsgeräts und ein landwirtschaftlichen Arbeitsgerät.

US 2003/0037985 A1 offenbart eine Vorrichtung zum Steuern eines landwirtschaftlichen Fahrzeugs, insbesondere eines Mähdreschers, die in der Fahrerkabine im Wirkungsbereich des Fahrzeugführers angeordnet ist, mit einem Multifunktionsgriff, der ein Griffteil mit einer Mehrzahl von Bedienelementen aufweist, wobei die Bedienelemente so angeordnet sind, dass sie mit einem oder zwei Fingern einer an dem Griffteil ruhenden Hand des Fahrzeugführers sicher erreichbar sind, und die Bedienelemente zur Einstellung von ersten Steuerfunktionen des Fahrzeugs dienen, wobei mindestens ein Bedienelement des Multifunktionsgriffs als Mehrfach-Bedienelement ausgebildet ist, und in einem Betätigungsumfeld des Fahrzeugführers wenigstens ein Auswahl/Übergabe- Bedienelement angeordnet ist, womit wenigstens eine weitere Steuerfunktion des Mehrfach-Bedienelementes vorwählbar ist.

US 5,201,068 bezieht sich auf elektronische Thermostate zur temperaturabhängigen Steuerung einer oder mehrerer Temperatur Lasten und insbesondere auf einen digitalen programmierbaren Thermostaten mit einer Reihe von Multifunktions-Eingabetasten und Multimode-Anzeigemitteln, die eine schnelle, bequeme sowie benutzerfreundliche Bedienung ermöglichen. Die Eingabetasten sind mit einer Logik versehen, die erkennt, ob eine Taste dauerhaft gedrückt oder nur angetippt wird.

US 4,730,941 betrifft eine Funktelekommunikationsvorrichtung mit einer Lautstärketaste, wobei erkannt wird, ob diese dauerhaft gedrückt oder nur angetippt wird und die Lautstärke im einen Fall erhöht sowie im anderen Fall verringert wird.

Im Betrieb von landwirtschaftlichen Arbeitsgeräten, wie zum Beispiel im Betrieb einer Kombination eines landwirtschaftlichen Zugfahrzeugs mit einem landwirtschaftlichen Anhängegerät, spielt der Einsatz der Automatisierungs- und Informationstechnik eine immer größere Bedeutung. Dabei tauschen die Baugruppen eines Arbeitsgeräts über einen Datenbus, der in der Landwirtschaft auch als ISOBUS bezeichnet wird, untereinander Daten aus. So tauscht zum Beispiel ein landwirtschaftliches Zugfahrzeug mit einem landwirtschaftlichen Anhängegerät Daten über den ISO-Datenbus aus. Eine Mensch-Maschine-Schnittstelle eines ISO-Datenbus-Steuerungssystems eines landwirtschaftlichen Arbeitsgeräts dient der Anzeige und Eingabe von Daten für das landwirtschaftliche Arbeitsgerät. Aus der Praxis bekannte Mensch-Maschine-Schnittstellen weisen einen Bildschirm und mehrere Softkey-Eingabetasten auf, wobei die Softkey-Eingabetasten abhängig von einer zugehörigen Bildschirmanzeige des Bildschirms unterschiedliche Funktionen ausführen. Die Funktion von Softkey-Eingabetasten ist nicht fest vorgeben, sondern wird durch Änderung des der Taste zugewiesenen Bildschirmbereiches dynamisch angepasst. Softkey-Eingabetasten können als Hardwaretasten oder als Bereiche eines als Touch-Screen ausgebildeten Bildschirms ausgebildet sein. Typischerweise sind erste Softkey-Eingabetasten abhängig vom zu steuernden oder zu regelnden Arbeitsgerät mit entsprechenden Funktionen steuerungsseitig fest vorbelegt, wohingegen zweite Softkey-Eingabetasten mit entsprechenden Funktionen frei belegbar sind. Zusätzlich zu den Softkey-Eingabetasten kann die Mensch-Maschine-Schnittstelle auch Hardkey-Eingabetasten aufweisen, deren Funktion unabhängig vom zu steuernden oder zu regelnden Arbeitsgerät fest vorgeben ist.

Die Anzahl der zur Verfügung stehenden Softkey-Eingabetasten, insbesondere der zur Verfügung stehenden zweiten Softkey-Eingabetasten, die mit entsprechenden Funktionen frei belegbar sind, ist begrenzt. Dies ist insbesondere dann problematisch, wenn eine Vielzahl unterschiedlicher Betriebsparametern des zu steuernden oder zu regelnden Arbeitsgeräts über die Mensch-Maschine-Schnittstelle eingegeben bzw. verändert werden sollen. Dies ist z.B. bei einem landwirtschaftlichen Arbeitsgerät aus einem Zugfahrzeug und mehreren mit dem Zugfahrzeug gekoppelten Mähwerken bekannt, insbesondere dann, wenn an das Zugfahrzeug ein Frontmähwerk und zwei Heckmähwerke gekoppelt sind. In diesem Fall ist es z.B. erforderlich, für jedes Mähwerk einen Sollwert für einen sogenannten Entlastungsdruck in einem definierten Stellbereich einzustellen, wozu dann in der Praxis sechs Softkey-Eingabetasten mit entsprechenden Funktionen belegt werden müssen, nämlich für jedes der drei Mähwerke jeweils eine Softkey-Eingabetaste zur Erhöhung des Sollwerts und jeweils eine andere Softkey-Eingabetaste zur Verringerung des Sollwerts. Dies ist jedoch nicht praktikabel, da entweder die Anzahl der frei belegbaren zweiten Softkey-Eingabetasten nicht ausreichend ist oder keine ausreichende Anzahl von zweiten Softkey-Eingabetasten für andere Funktionen mehr zur Verfügung steht.

Hiervon ausgehend liegt der vorliegenden Erfindung die Aufgabe zugrunde, eine neuartige Mensch-Maschine-Schnittstelle zu schaffen, mit der es möglich ist, Betriebsparameter des zu steuernden oder zu regelnden Arbeitsgeräts unter Vermeidung der obigen Nachteile einzustellen.

Diese Aufgabe wird durch eine Mensch-Maschine-Schnittstelle nach Anspruch 1 gelöst. Mindestens eine der zweiten Softkey-Eingabetasten ist zur Verstellung eines Betriebsparameters des zu steuernden oder zu regelnden Arbeitsgeräts derart mit einer Funktion belegt, dass bei tippartiger Betätigung der jeweiligen zweiten Softkey-Eingabetaste der entsprechende Betriebsparameter in einem definierten Stellbereich in einer ersten Stellrichtung verstellbar ist, und dass bei permanenter Betätigung der jeweiligen zweiten Softkey-Eingabetaste der entsprechende Betriebsparameter in dem definierten Stellbereich in einer zweiten, entgegengesetzten Stellrichtung verstellbar ist.

Mit der hier vorliegenden Erfindung wird eine neuartige Möglichkeit zur Verstellung von Betriebsparametern für ein zu steuerndes oder zu regelndes landwirtschaftliches Arbeitsgerät geschaffen. Je Betriebsparameter ist sowohl zur Erhöhung als auch zur Verringerung desselben in einem definierten Stellbereich lediglich eine Softkey-Eingabetaste erforderlich. Hierdurch wird die Anzahl der benötigten Softkey-Eingabetasten reduziert, so dass es möglich ist, eine Vielzahl unterschiedlicher Betriebsparameter über Softkey-Eingabetasten zu verstellen.

Nach einer vorteilhaften Weiterbildung der Erfindung ist bei tippartiger Betätigung, d.h. bei kurzzeitigem Drücken, der jeweiligen zweiten Softkey-Eingabetaste der entsprechende Betriebsparameter in dem definierten Stellbereich in der ersten Stellrichtung in definierten ersten Stellschritten verstellbar, vorzugsweise anhebbar, wohingegen bei permanenter Betätigung, d.h. beim Gedrückthalten, der jeweiligen zweiten Softkey-Eingabetaste der entsprechende Betriebsparameter in dem definierten Stellbereich in der zweiten Stellrichtung in definierten zweiten Stellschritten verstellbar, vorzugsweise absenkbar, ist. Dies erlaubt eine besonders vorteilhafte und komfortable Verstellung der Betriebsparameter in dem jeweiligen Stellbereich.

Besonders vorteilhaft ist es, wenn beim Gedrückt halten bzw. beim permanenten Betätigen der jeweiligen zweiten Softkey-Eingabetaste, mehrere Stellschritte in der zweiten Stellrichtung automatisch nacheinander verstellt werden. Vorzugsweise kann eine erfindungsgemäße Einrichtung dazu so eingerichtet sein, dass sie beim Erkennen des Gedrückthaltens einer zweiten Softkey-Eingabetaste mit dem Verstellen in der zweiten Stellrichtung beginnt und das Verstellen beendet, sobald die Softkey-Eingabetaste losgelassen wird bzw. die permanente Betätigung beendet wird.

Zur Anpassung an unterschiedliche Betriebsparameter, kann die Größe der Stellschritte an einer erfindungsgemäßen Einrichtung vorteilhaft vorgegeben werden. Weiterhein kann vorgesehen werden, dass eine erfindungsgemäße Einrichtung beim Gedrückt halten einer zweiten Softkey-Eingabetaste nach Durchführung einer vorgegebenen Anzahl von Stellschritten das Verstellen selbsttätig beendet, obwohl die Softkey-Eingabetaste weiterhin betätigt ist. Dadurch kann verhindert werden, dass der Bediener den jeweiligen Betriebsparameter versehentlich zu weit in diese Stellrichtung verstellt.

Durch das aufeinander folgende Verstellen mehrerer Stellschritte - ohne mehrfaches permanentes Betätigen der Softkey-Eingabetaste - ist es vorteilhaft einfach möglich, den jeweiligen Betriebsparameter ohne Verzögerung um einen größeren Einstellbereich zu verstellen.

Beispielsweise können zum Einstellen eines Entlastungsdrucks eines Mähwerks Stellschritte von z.B. 5 bar vorgesehen werden, um die der Auflagedruck schrittweise abgesenkt werden kann. Weiterhin kann an der erfindungsgemäßen Einrichtung voreingestellt werden, dass beim Gedrückt halten der jeweiligen Softkey-Eingabetaste die Verstellung nach beispielsweise sechs Stellschritten beendet wird. Selbstverständlich ist es möglich, eine kleinere oder größere Anzahl von Stellschritten vorzugeben, nach deren Einstellung die Verstellung pausiert bzw. endet. Ebenso können kleinere oder größere Stellschritte vorgesehen werden.

Vorzugsweise generiert die Mensch-Maschine-Schnittstelle bei jeder tippartigen Betätigung der jeweiligen zweiten Softkey-Eingabetaste, bei welcher der entsprechende Betriebsparameter tatsächlich um den entsprechenden ersten Stellschritt verstellt wird, einen ersten Signalton. Bei der permanenten Betätigung der jeweiligen zweiten Softkey-Eingabetaste generiert die Mensch-Maschine-Schnittstelle dann, wenn der entsprechende Betriebsparameter tatsächlich um den entsprechenden zweiten Stellschritt verstellt wird, einen zweiten, vom ersten Signalton unterschiedlichen Signalton. Die Generierung der unterschiedlichen Signaltöne unterstützt die komfortable Verstellung der Betriebsparameter in dem jeweiligen Stellbereich. Ein Bediener wird durch die unterschiedlichen Signaltöne bei der Verstellung der Betriebsparameter unterstützt, insbesondere beim permanenten Betätigen einer zweiten Softkey-Eingabetaste und der Verstellung von mehreren Stellschritten nacheinander, kann der Bediener die ausgeführten Stellschritte mit zählen und auf den Einstellwert schließen.

Ferner betrifft die Erfindung ein Steuerungssystem eines landwirtschaftlichen Arbeitsgeräts nach Anspruch 10 und ein landwirtschaftliches Arbeitsgerät nach Anspruch 11.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

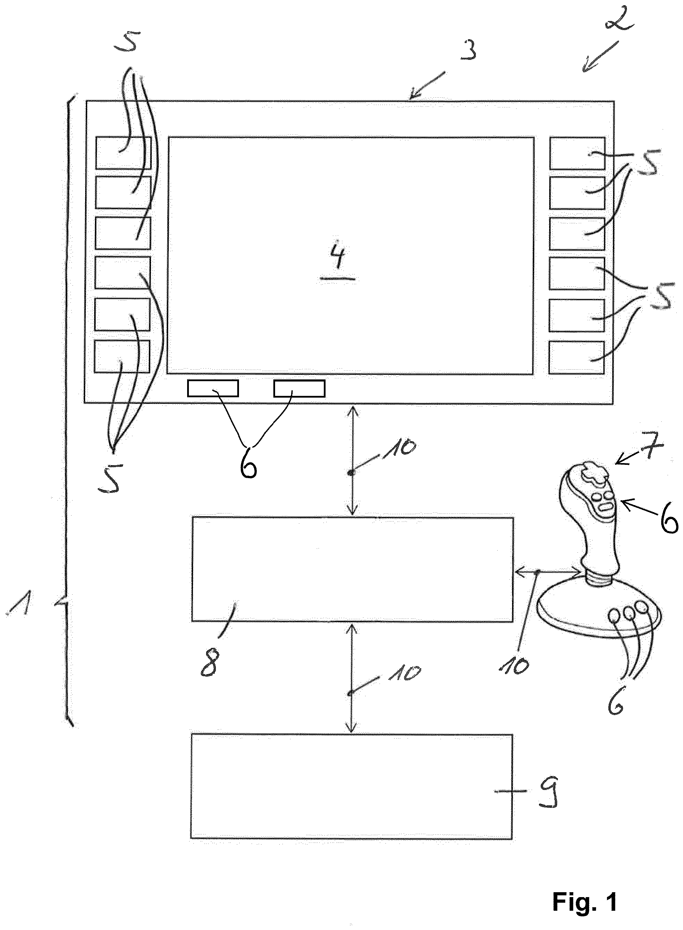

- Fig. 1: ein Blockschaltbild eines Steuerungssystem mit einer Mensch-Maschine-Schnittstelle für ein zu steuerndes oder zu regelndes, landwirtschaftliches Arbeitsgerät.

Die hier vorliegende Erfindung betrifft eine Mensch-Maschine-Schnittstelle für ein über einen ISO-Datenbus zu steuerndes oder zu regelndes landwirtschaftliches Arbeitsgerät.

Ferner betrifft die Erfindung ein Steuerungssystem einer solchen Mensch-Maschine-Schnittstelle sowie ein landwirtschaftliches Arbeitsgerät mit einem solchen Steuerungssystem.

Fig. 1 zeigt stark schematisiert Baugruppen eines Steuerungssystems 1 für ein landwirtschaftliches Arbeitsgerät 9, wobei es sich bei dem landwirtschaftlichen Arbeitsgerät 9 z.B. um ein Zugfahrzeug handeln kann, an welches mehrere Mähwerke gekoppelt sind. Das Steuerungssystem 1 umfasst ein Steuergerät 8 sowie eine Mensch-Maschine-Schnittstelle 2, die im gezeigten Ausführungsbeispiel ein Anzeige- und Eingabeelement 3 sowie einen Joystick 7 umfasst. Das Steuergerät 8 tauscht einerseits mit dem landwirtschaftlichen Arbeitsgerät 9 und andererseits mit den Baugruppen 3 und 7 der Mensch-Maschine-Schnittstelle 2 über einen ISO-Datenbus 10 Daten aus.

Die Mensch-Maschine-Schnittstelle 2, nämlich das Anzeige- und Eingabeelement 3 derselben, verfügt über einen Bildschirm 4. Das Anzeige- und Eingabeelement 3 verfügt weiterhin über mehrere Softkey-Eingabetasten 5, 6. Im gezeigten Ausführungsbeispiel handelt es sich bei den Softkey-Eingabetasten 5, 6 um Hardwaretasten, die neben dem Bildschirm 4 positioniert sind. Im Unterschied hierzu ist es auch möglich, dass die Softkey-Eingabetasten von Bereichen eines als Touch-Screen ausgebildeten Bildschirms 4 bereitgestellt sind.

Die Softkey-Eingabetasten 5, 6 sind solche Eingabetasten, die abhängig von einer zugehörigen Bildschirmanzeige des Bildschirms 4 unterschiedliche Funktionen ausführen bzw. denen abhängig von der zugehörigen Bildschirmanzeige des Bildschirms 4 unterschiedlichen Funktionen zugeordnet sind.

Dabei unterscheidet man zwischen ersten Softkey-Eingabetasten 5, bei welchen die entsprechenden Funktionen abhängig vom zu steuernden oder zu regelnden Arbeitsgerät steuerungsseitig fest vorgegeben sind, sowie zwischen zweiten Softkey-Eingabetasten 6, deren Funktionen frei belegbar sind.

Solche zweite Softkey-Eingabetasten 6 werden auch als Auxiliary-Eingabetasten bezeichnet.

Zusätzlich zu den Softkey-Eingabetasten 5, 6 des Anzeige- und Eingabeelements 3 kann die Mensch-Maschine-Schnittstelle 2 auch Hardkey-Eingabetasten aufweisen, die unabhängig von der Bildschirmanzeige des Bildschirms 4 stets fest mit Funktionen belegt sind, deren zugeordnete Funktion also nicht von einer Bildschirmanzeige des Bildschirms 4 abhängig ist.

Im gezeigten Ausführungsbeispiel sind auch dem Joystick 7 zweite Softkey-Eingabetasten 6 zugeordnet, deren Funktion frei belegbar ist, wobei die Funktionen die Softkey-Eingabetasten 6 des Joysticks 7 ebenfalls über eine Bildschirmanzeige auf dem Bildschirm 4 des Anzeige- und Eingabeelements 3 visualisiert werden können.

Erfindungsgemäß ist mindestens eine der zweiten Softkey-Eingabetasten 6 der Mensch-Maschine-Schnittstelle 2 zur Verstellung eines Betriebsparameters des zu steuernden oder zu regelnden Arbeitsgeräts 9 derart mit einer Funktion belegt, dass bei tippartiger Betätigung der jeweiligen zweiten Softkey-Eingabetaste 6 der entsprechende Betriebsparameter in einem definierten Stellbereich in einer ersten Stellrichtung verstellbar ist, wohingegen bei permanenter Betätigung der jeweiligen zweiten Softkey-Eingabetaste 6 der entsprechende Betriebsparameter in dem definierten Stellbereich in einer zweiten, entgegengesetzten Stellrichtung verstellbar ist.

Bei tippartiger Betätigung der jeweiligen zweiten Softkey-Eingabetests 6 ist der entsprechende Betriebsparameter in dem ersten Stellbereich in definierten ersten Stellschritten verstellbar, vorzugsweise anhebbar, wobei die Anzahl der ersten Stellschritte, um welche der entsprechende Betriebsparameter verstellt wird, der Anzahl der Tippbetätigungen der jeweiligen zweiten Softkey-Eingabetaste 6 entspricht, vorausgesetzt, dass der definierte Stellbereich nicht verlassen wird.

Hat der entsprechende Betriebsparameter einen Wert angenommen, der einer Grenze des definierten Stellbereichs entspricht, so kann derselbe bei tippartiger Betätigung über diese Grenze hinaus vorzugsweise nicht verstellt werden.

Zur diesbezüglichen Unterstützung des Bedieners generiert die Mensch-Maschine-Schnittstelle 2 bei jeder tippartigen Betätigung der jeweiligen zweiten Softkey-Eingabetaste 6, bei welcher der entsprechende Betriebsparameter tatsächlich in der ersten Stellrichtung innerhalb des definierten Stellbereich um den entsprechenden ersten Stellschritt verstellt wird, einen ersten Signalton, der akustisch wiedergegeben wird.

Sollte sich der Betriebsparameter an einer Stellbereichsgrenze befinden, und zwar derart, dass eine weitere schrittartige Veränderung des Betriebsparameters infolge einer tippartigen Betätigung der jeweiligen zweiten Softkey-Eingabetaste 6 ein Verlassen des Stellbereichs für den jeweiligen Betriebsparameter bedeuten würde, so wird, wie bereits oben erwähnt, eine weitere Verstellung des jeweiligen Betriebsparameters nicht zugelassen, so dass dann bei der jeweiligen tippartigen Betätigung der jeweiligen zweiten Softkey-Eingabetaste 6 auch kein erster Signalton generiert wird.

Um den jeweiligen Betriebsparameter über dieselbe Softkey-Eingabetaste 6 in der entgegengesetzten zweiten Stellrichtung innerhalb des definierten Stellbereichs verstellen zu können, ist bei permanenter Betätigung der jeweiligen zweiten Softkey-Eingabetaste 6 der entsprechende Betriebsparameter in dem definierten Stellbereich in definierten zweiten Stellschritten verstellbar, vorzugsweise absenkbar.

Die Mensch-Maschine-Schnittstelle 2 generiert bei permanenter Betätigung der jeweiligen zweiten Softkey-Eingabetaste 6 dann, wenn der entsprechende Betriebsparameter tatsächlich infolge der permanenten Betätigung um den entsprechenden zweiten Stellschritt verstellt wird, einen zweiten Signalton, der vom ersten Signalton abweicht, wobei dieser zweite Signalton akustisch wiedergegeben wird.

Sollte der entsprechende Betriebsparameter bereits bis an eine Grenze des jeweiligen Stellbereichs verstellt worden sein, kann auch bei permanenter Betätigung der jeweiligen zweiten Softkey-Eingabetaste 6 der jeweilige Betriebsparameter nicht über die entsprechende Grenze des Stellbereichs hinaus verstellt werden, so dass dann bei weiterer permanenter Betätigung der jeweiligen zweiten Softkey-Eingabetaste der entsprechende Betriebsparameter nicht weiterverstellt und auch kein entsprechender zweiter Signalton mehr generiert wird.

Sowohl die Schrittweite der ersten Stellschritte zur Verstellung des jeweiligen Betriebsparameters in der ersten Stellrichtung als auch die Schrittweite der zweiten Stellschritte zur Verstellung des jeweiligen Betriebsparameters in der zweiten Stellrichtung können entweder fest vorgegeben oder vorzugsweise variabel einstellbar sein. Den ersten und zweiten Stellschritten können vorzugsweise unterschiedliche Schrittweiten bzw. Inkremente zugeordnet werden. Darüber hinaus können auch Grenzen des Verstellbereichs vorgegeben werden.

Wie bereits ausgeführt, sind die zweiten Softkey-Eingabetasten im gezeigten Ausführungsbeispiel als Hardwaretasten ausgeführt, z.B. als Hardwaretasten des Anzeige- und Eingabegeräts 3 oder auch als Hardwaretasten des Joysticks 7. Es ist auch möglich, dass die zweiten Softkey-Eingabetasten Bestandteil des Bildschirms 4 sind, also von Bereichen eines als Touch-Screen ausgebildeten Bildschirms bereitgestellt sind.

Es liegt im Sinne der hier vorliegenden Erfindung, variabel parametrierbare Softkey-Eingabetasten 6 einer Mensch-Maschine-Schnittstelle 2 so mit einer Funktion zu belegen, dass über dieselbe Softkey-Eingabetaste 6 der Betriebsparameter in einem Stellbereich sowohl erhöht als auch verringert werden kann.

Die Erhöhung erfolgt vorzugsweise durch eine relativ kurze, mehrfache, tippartige Betätigung der jeweiligen Softkey-Eingabetaste 6, wobei die Anzahl der tippartigen Betätigung die Erhöhung des jeweiligen Betriebsparameters im entsprechenden Stellbereich definiert. In diesem Zusammenhang wird vorzugsweise ein entsprechender Signalton generiert und akustisch wiedergegeben, um die Veränderung des Betriebsparameters in der ersten Stellrichtung akustisch wahrnehmbar zu machen. Durch eine lange bzw. permanente Betätigung der jeweiligen Softkey-Eingabetaste ist der entsprechende Betriebsparameter in der entgegengesetzten zweiten Stellrichtung innerhalb des Stellbereichs veränderbar, nämlich verringerbar, wobei hierbei vorzugsweise ein zweiter Signalton erzeugt und akustisch wiedergegeben wird, um die entsprechende Verstellung des Betriebsparameters in der zweiten Stellrichtung akustisch wahrnehmbar zu machen. Hierdurch wird eine besonders vorteilhafte komfortable Verstellung von Betriebsparametern innerhalb eines vorgegebenen Stellbereichs ermöglicht.

Eine weitere vorteilhafte Erhöhung des Bedienkomforts kann dadurch erreicht werden, dass eine erfindungsgemäße Einrichtung so eingerichtet ist, dass sie beim Erkennen des Gedrückthaltens bzw. einer permanenten Betätigung einer zweiten Softkey-Eingabetaste mit dem Verstellen in der zweiten Stellrichtung beginnt und das Verstellen erst beendet, wenn die Softkey-Eingabetaste losgelassen wird bzw. die permanente Betätigung beendet wird. Das Verstellen in diese Stellrichtung kann dabei stufenlos oder in vorgebbaren Stufen bzw. Stellschritten erfolgen. Weiterhein kann vorgesehen werden, dass eine erfindungsgemäße Einrichtung beim Gedrückt halten einer zweiten Softkey-Eingabetaste nach Durchführung einer vorgegebenen Anzahl von Stellschritten bzw. dem Verstellen eines vorgegebenen Stellbereiches das Verstellen automatisch beendet. Dadurch kann der jeweilige Betriebsparameter besonders vorteilhaft ohne Verzögerung um einen größeren Einstellbereich verstellt werden. Durch das automatische Beenden des Verstellens nach einer vorgegebenen Anzahl von Stellschritten bzw. dem Verstellen eines vorgegebenen Stellbereiches kann verhindert werden, dass der Bediener den jeweiligen Betriebsparameter versehentlich zu weit in diese Stellrichtung verstellt.

Bei einer Verstellung in der zweiten Stellrichtung in automatisch aufeinander folgenden Stufen bzw. Stellschritten wird vorzugsweise jeder vorgenommene Stellschritt bzw. jede Stellstufe durch einen Signalton akustisch angezeigt.

Vorzugsweise kann mit der Erfindung für ein landwirtschaftliches Arbeitsgerät aus einem Zugfahrzeug und aus mit dem Zugfahrzeug gekoppelten Mähwerken, nämlich einem Frontmähwerk und zwei Heckmähwerken, unter Nutzung von lediglich drei Softkey-Eingabetasten 6 für jedes Mähwerk ein Sollwert für einen sogenannten Entlastungsdruck in einem definierten Stellbereich individuell vergrößert und verkleinert werden. Dabei können z.B. die drei Softkey-Eingabetasten 6 des Joysticks 7 genutzt werden.

### Bezugszeichenliste

- 1: Steuerungssystem
- 2: Mensch-Maschine-Schnittstelle
- 3: Anzeige- und Eingabeelement
- 4: Bildschirm
- 5: erste Softkey-Eingabetaste
- 6: zweite Softkey-Eingabetaste
- 7: Joystick
- 8: Steuergerät
- 9: landwirtschaftliches Arbeitsgerät
- 10: ISO-Datenbus

## Patentansprüche

1. Mensch-Maschine-Schnittstelle (2) für ein über einen ISO-Datenbus (10) zu steuerndes oder zu regelndes, landwirtschaftliches Arbeitsgerät (9), mit einem Bildschirm (4) und mit mehreren Softkey-Eingabetasten (5, 6), die abhängig von einer zugehörigen Bildschirmanzeige des Bildschirms (4) unterschiedliche Funktionen ausführen, wobei die Softkey-Eingabetasten (5, 6) als Hardwaretasten oder von Bereichen des als Touch-Screen ausgebildeten Bildschirms (4) ausgebildet sind, wobei erste Softkey-Eingabetasten (5) mit entsprechenden Funktionen steuerungsseitig fest vorbelegt sind, wohingegen zweite Softkey-Eingabetasten (6) mit entsprechenden Funktionen frei belegbar sind, **dadurch gekennzeichnet, dass** mindestens eine der zweiten Softkey-Eingabetasten (6) zur Verstellung eines Betriebsparameters des zu steuernden oder zu regelnden Arbeitsgeräts (9) derart mit einer Funktion belegt ist, dass bei tippartiger Betätigung der jeweiligen zweiten Softkey-Eingabetaste (6) der entsprechende Betriebsparameter in einem definierten Stellbereich in einer ersten Stellrichtung verstellt wird, und dass bei permanenter Betätigung der jeweiligen zweiten Softkey-Eingabetaste (6) der entsprechende Betriebsparameter in dem definierten Stellbereich in einer zweiten, entgegengesetzten Stellrichtung verstellt wird.

2. Mensch-Maschine-Schnittstelle nach Anspruch 1, **dadurch gekennzeichnet, dass** bei tippartiger Betätigung der jeweiligen zweiten Softkey-Eingabetaste (6) der entsprechende Betriebsparameter in dem definierten Stellbereich in definierten ersten Stellschritten verstellt wird.

3. Mensch-Maschine-Schnittstelle nach Anspruch 2, **dadurch gekennzeichnet, dass** dieselbe bei jeder tippartigen Betätigung der jeweiligen zweiten Softkey-Eingabetaste (6), bei welcher der entsprechende Betriebsparameter tatsächlich um den entsprechenden ersten Stellschritt verstellt wird, einen ersten Signalton generiert.

4. Mensch-Maschine-Schnittstelle nach einem der Ansprüche 1 bis 3, **dadurch gekennzeichnet, dass** bei permanenter Betätigung der jeweiligen zweiten Softkey-Eingabetaste (6) der entsprechende Betriebsparameter in dem definierten Stellbereich in definierten zweiten Stellschritten verstellt wird.

5. Mensch-Maschine-Schnittstelle nach Anspruch 4, **dadurch gekennzeichnet, dass** bei permanenter Betätigung der jeweiligen zweiten Softkey-Eingabetaste (6) das Verstellen des entsprechenden Betriebsparameters in der zweiten Stellrichtung beginnt und das Verstellen erst beendet wird, wenn die permanente Betätigung beendet wird oder der Betriebsparameter um einen vorgebbaren Stellbereich verstellt wurde.

6. Mensch-Maschine-Schnittstelle nach Anspruch 5, **dadurch gekennzeichnet, dass** der Betriebsparameter bei permanenter Betätigung der jeweiligen zweiten Softkey-Eingabetaste (6) in vorgebbaren Stufen oder Stellschritten verstellt wird und die Verstellung automatisch beendet wird, wenn die Einstellung um eine vorgebbare Anzahl von Stufen oder Stellschritten verstellt wurde oder die Softkey-Eingabetaste (6) nicht mehr betätigt wird.

7. Mensch-Maschine-Schnittstelle nach einem der Ansprüche 4 bis 6, **dadurch gekennzeichnet, dass** dieselbe bei der permanenten Betätigung der jeweiligen zweiten Softkey-Eingabetaste (6) dann, wenn der entsprechende Betriebsparameter tatsächlich um den entsprechenden zweiten Stellschritt verstellt wird, einen zweiten, vom ersten Signalton unterschiedlichen Signalton generiert.

8. Mensch-Maschine-Schnittstelle nach einem der Ansprüche 1 bis 6, **dadurch gekennzeichnet, dass** die zweiten Softkey-Eingabetasten (6) als Hardwaretasten eines Joysticks (7) ausgebildet sind.

9. Mensch-Maschine-Schnittstelle nach einem der Ansprüche 1 bis 7, **dadurch gekennzeichnet, dass** die zweiten Softkey-Eingabetasten (6) Bestandteil eines den Bildschirm (4) aufweisenden Anzeige- und Eingabeelements (3) sind.

10. Steuerungssystem (1) eines über einen ISO-Datenbus (10) zu steuernden und/oder zu regelnden, landwirtschaftlichen Arbeitsgeräts (9), mit einer Mensch-Maschine-Schnittstelle (2) nach einem der Ansprüche 1 bis 9.

11. Landwirtschaftliches Arbeitsgerät (9) mit einem Steuerungssystem (1) nach Anspruch 10.

## Claims

1. Human-machine interface (2) for an agricultural implement (9) to be controlled or to be regulated via an ISOBUS (10), with a screen (4) and with several softkey input keys (5, 6), which perform different functions depending on an associated on-screen display of the screen (4), wherein the softkey input keys (5, 6) are formed as hardware keys or by areas of the screen (4) formed as a touch screen, wherein first softkey input keys (5) are permanently pre-assigned corresponding functions on the control side, whereas second softkey input keys (6) can be freely assigned corresponding functions, **characterized in that** at least one of the second softkey input keys (6) is assigned a function for adjusting an operating parameter of the implement (9) to be controlled or to be regulated such that when the respective second softkey input key (6) is tapped, the corresponding operating parameter is adjusted in a defined adjustment range in a first adjustment direction, and that when the respective second softkey input key (6) is continuously depressed, the corresponding operating parameter is adjusted in the defined adjustment range in a second, opposite adjustment direction.

2. Human-machine interface according to claim 1, **characterized in that** when the respective second softkey input key (6) is tapped, the corresponding operating parameter is adjusted in the defined adjustment range in defined first adjustment steps.

3. Human-machine interface according to claim 2, **characterized in that** it generates a first signal tone for each tap of the respective second softkey input key (6) for which the corresponding operating parameter is actually adjusted by the corresponding first adjustment step.

4. Human-machine interface according to one of claims 1 to 3, **characterized in that** when the respective second softkey input key (6) is continuously depressed, the corresponding operating parameter is adjusted in the defined adjustment range in defined second adjustment steps.

5. Human-machine interface according to claim 4, **characterized in that** when the respective second softkey input key (6) is continuously depressed, the adjustment of the corresponding operating parameter in the second adjustment direction begins and the adjustment is only stopped if the continuous depression is stopped or the operating parameter has been adjusted by a predefinable adjustment range.

6. Human-machine interface according to claim 5, **characterized in that** when the respective second softkey input key (6) is continuously depressed, the operating parameter is adjusted in predefinable stages or adjustment steps and the adjustment is automatically stopped if the setting has been adjusted by a predefinable number of stages or adjustment steps or the softkey input key (6) is no longer depressed.

7. Human-machine interface according to one of claims 4 to 6, **characterized in that** it generates a second signal tone different from the first signal tone when the respective second softkey input key (6) is continuously depressed if the corresponding operating parameter is actually adjusted by the corresponding second adjustment step.

8. Human-machine interface according to one of claims 1 to 6, **characterized in that** the second softkey input keys (6) are formed as hardware keys of a joystick (7).

9. Human-machine interface according to one of claims 1 to 7, **characterized in that** the second softkey input keys (6) are part of a display and input element (3) featuring the screen (4).

10. Control system (1) of an agricultural implement (9) to be controlled and/or to be regulated via an ISOBUS (10), with a human-machine interface (2) according to one of claims 1 to 9.

11. Agricultural implement (9) with a control system (1) according to claim 10.

## Revendications

1. Interface homme-machine (2) pour un appareil de travail agricole (9) à commander ou à réguler par l'intermédiaire d'un bus ISO (10), comprenant un écran (4) et comprenant plusieurs touches de saisie programmables (5, 6) qui exécutent différentes fonctions selon un affichage d'écran associé de l'écran (4), les touches de saisie programmables (5, 6) étant conçues sous la forme de touches hardware ou de zones de l'écran (4) conformées en écran tactile, des premières touches de saisie programmables (5) étant préaffectées à demeure, côté commande, avec des fonctions correspondantes, tandis que des secondes touches de saisie programmables (6) sont librement affectables avec des fonctions correspondantes, **caractérisée en ce qu'**au moins une des secondes touches de saisie programmables (6) est affectée avec une fonction pour modifier un paramètre d'exploitation de l'appareil de travail à commander ou à réguler (9), de façon qu'en cas d'actionnement impulsif de la seconde touche de saisie programmable respective (6), le paramètre d'exploitation correspondant soit modifié, dans une zone de modification définie, dans une première direction de modification, et **en ce qu'**en cas d'actionnement permanent de la seconde touche de saisie programmable respective (6), le paramètre d'exploitation correspondant soit modifié, dans la zone de modification définie, dans une seconde direction de modification opposée.

2. Interface homme-machine selon la revendication 1, **caractérisée en ce qu'**en cas d'actionnement impulsif de la seconde touche de saisie programmable respective (6), le paramètre d'exploitation correspondant est modifié, dans la zone de modification définie, selon des premiers pas de modification définis.

3. Interface homme-machine selon la revendication 2, **caractérisée en ce qu'**à chaque actionnement impulsif de la seconde touche de saisie programmable respective (6), lors duquel le paramètre d'exploitation correspondant est effectivement modifié selon le premier pas de modification correspondant, elle génère un premier signal sonore.

4. Interface homme-machine selon une des revendications 1 à 3, **caractérisée en ce qu'**en cas d'actionnement permanent de la seconde touche de saisie programmable respective (6), le paramètre d'exploitation correspondant est modifié, dans la zone de modification définie, selon des seconds pas de modification définis.

5. Interface homme-machine selon la revendication 4, **caractérisée en ce qu'**en cas d'actionnement permanent de la seconde touche de saisie programmable respective (6), la modification du paramètre d'exploitation correspondant dans la seconde direction de modification commence et la modification ne prend fin que lorsque l'actionnement permanent est terminé ou que le paramètre d'exploitation a été modifié selon une zone de modification prescriptible.

6. Interface homme-machine selon la revendication 5, **caractérisée en ce qu'**en cas d'actionnement permanent de la seconde touche de saisie programmable respective (6), le paramètre d'exploitation est modifié par paliers ou par pas de modification prescriptibles, et la modification prend automatiquement fin lorsque le réglage a été modifié selon un nombre prescriptible de paliers ou de pas de modification ou que la touche de saisie programmable (6) n'est plus actionnée.

7. Interface homme-machine selon une des revendications 4 à 6, **caractérisée en ce qu'**en cas d'actionnement permanent de la seconde touche de saisie programmable respective (6), lors duquel le paramètre d'exploitation correspondant est effectivement modifié selon le second pas de modification correspondant, elle génère un second signal sonore différent du premier signal sonore.

8. Interface homme-machine selon une des revendications 1 à 6, **caractérisée en ce que** les secondes touches de saisie programmables (6) sont conformées en touches hardware d'une manette (7).

9. Interface homme-machine selon une des revendications 1 à 7, **caractérisée en ce que** les secondes touches de saisie programmables (6) font partie intégrante d'un élément d'affichage et de saisie (3) comportant l'écran (4).

10. Système de commande (1) d'un appareil de travail agricole (9) à commander et/ou à réguler par l'intermédiaire d'un bus ISO (10), comprenant une interface homme-machine (2) selon une des revendications 1 à 9.

11. Appareil de travail agricole (9) comprenant un système de commande (1) selon la revendication 10.
